# EUROPEAN PATENT APPLICATION

(11) **EP 4 715 880 A1**
(43) Date of publication of application: **25.03.2026**
(21) Application number: 24909513.4
(22) Date of filing: 17.05.2024
(51) Int. Cl.: H01M 4/02, H01M 4/04, H01M 50/593

(54) **ELECTRODE SHEET, BATTERY, AND ELECTRODE SHEET PROCESSING METHOD**

(30) Priority: 29.12.2023 CN 202311869671
(71) Applicant: Huizhou Liwinon New Energy Technology Co., Ltd., Huizhou, Guangdong 516100 (CN)
(72) Inventor: LI, Guodong, Huizhou, Guangdong 516100 (CN); WANG, Zhonghui, Huizhou, Guangdong 516100 (CN); YAN, Jun, Huizhou, Guangdong 516100 (CN); XIONG, Jichao, Huizhou, Guangdong 516100 (CN); LI, Cong, Huizhou, Guangdong 516100 (CN); JI, Rongjin, Huizhou, Guangdong 516100 (CN); WU, Shengben, Huizhou, Guangdong 516100 (CN)
(74) Representative: Primiceri, Maria Vittoria
(86) International application number: PCT/CN2024/093947
(87) International publication number: WO 2025/138546

(57) **Abstract**

An electrode sheet, a battery, and an electrode sheet processing method. The electrode sheet comprises a current collector, an active layer, and a first insulating layer. The first insulating layer and the active layer are both coated on a first surface of the current collector, and the first insulating layer comprises a first insulating portion and a second insulating portion. The first insulating portion has a first side edge and a second side edge which are oppositely arranged, the first side edge abuts against the active layer, and the second side edge abuts against the second insulating portion. The second insulating portion is used for cutting processing. Since the first insulating portion is arranged between the second insulating portion and the active layer, and a second thickness b of the second insulating portion is greater than a first thickness a of the first insulating portion, the second insulating portion has a larger thickness, and after cutting, the second insulating portion can effectively improve the compatibility of the insulating layer with burrs formed on a cut surface, thereby reducing the risk of the burrs piercing a separator.

## Description

### TECHNICAL FIELD

The present disclosure relates to the technical field of battery manufacturing, and in particular, to an electrode sheet, a battery, and a method for manufacturing an electrode sheet.

### BACKGROUND

Two sides of the active layer on the current collector of a zebra-coated electrode sheet are each coated with an insulating layer. During manufacturing, the electrode sheet coated with the active layer and the insulating layer needs to be rolled. The rolling can reduce the thicknesses of the active layer and the insulating layer, so that the thickness of the electrode sheet can be reduced and the energy density of the electrode sheet can be improved. After rolling, the insulating layer needs to be cut to make the electrode sheet meet usage requirements. When the insulating layer is cut, burrs may be formed on part of the cut surface of the insulating layer. In the battery cell, the thinner the insulating coating, the more likely burrs are to extend beyond the coating area and pierce the separator in the thickness direction of the electrode sheet, eventually leading to the safety problem of short circuit inside the battery cell. In the prior art, to facilitate rolling, the insulating layer generally has a uniform thickness. After cutting, the insulating layer has poor compatibility with burrs, the separator of the battery cell is easily pierced by burrs, and the battery cell is easily short-circuited.

### SUMMARY

A main objective of the present disclosure is to provide an electrode sheet, a battery, and a method for manufacturing an electrode sheet, to solve the technical problem of poor compatibility of an electrode sheet with burrs.

To achieve the above objective, a first aspect of the present disclosure provides an electrode sheet, which includes a current collector, an active layer, and a first insulating layer. The active layer is coated on a first surface of the current collector. The first insulating layer is coated on the first surface of the current collector, and the first insulating layer includes a first insulating portion and a second insulating portion; the first insulating portion has a first side edge and a second side edge arranged opposite to the first side edge, the first side edge is pressed against the active layer, the second side edge is pressed against the second insulating portion, and the second insulating portion is configured to be cut; in a direction perpendicular to the first surface, the first insulating portion has a first thickness a and the second insulating portion has a second thickness b, and the first thickness a and the second thickness b satisfy: b>a.

In some embodiments, the first thickness a and the second thickness b satisfy: 1<b/a≤1.5.

In some embodiments, the second insulating portion has a third side edge and a fourth side edge arranged opposite to the third side edge, the third side edge is pressed against the second side edge, in an arrangement direction of the active layer and the first insulating layer, a first minimum distance c exists between the first side edge and the second side edge, a second minimum distance d exists between the third side edge and the fourth side edge, and the first minimum distance c and the second minimum distance d satisfy: 0.5≤d/c≤5.

In some embodiments, the first minimum distance c and the second minimum distance d satisfy: 1≤d/c≤2.

In some embodiments, the first minimum distance c and the second minimum distance d satisfy: 1 mm≤c+d≤20 mm.

In some embodiments, the electrode sheet further includes a second insulating layer, wherein the second insulating layer is arranged on a side of the active layer away from the first insulating layer, the second insulating layer includes a third insulating portion and a fourth insulating portion, one side of the third insulating portion is pressed against the active layer, another side of the third insulating portion is pressed against the fourth insulating portion, the fourth insulating portion is configured to be cut, in the direction perpendicular to the first surface, the third insulating portion has a third thickness e and the fourth insulating portion has a fourth thickness f, and the third thickness e and the fourth thickness f satisfy: f>e.

In some embodiments, the third insulating portion has a fifth side edge and a sixth side edge arranged opposite to the fifth side edge, the fifth side edge is pressed against the active layer, the sixth side edge is pressed against the fourth insulating portion, in the arrangement direction of the active layer and the first insulating layer, a third minimum distance g exists between the sixth side edge and the second side edge, a fourth minimum distance h exists between the first side edge and the fifth side edge, and the third minimum distance g and the fourth minimum distance h satisfy: 0.5 mm≤g-h≤3.5 mm.

In some embodiments, the third minimum distance g satisfies: 50 mm≤g≤500 mm.

In some embodiments, the fourth minimum distance h satisfies: 50 mm≤h≤500 mm.

A second aspect of the present disclosure further provides a battery, including the electrode sheet according to any one of the above embodiments.

A third aspect of the present disclosure provides a method for manufacturing an electrode sheet, including:
coating an active layer and a first insulating layer on a first surface of a current collector;
rolling the active layer and at least a part of the first insulating layer to form a first insulating portion and a second insulating portion, wherein the first insulating portion has a first thickness a, the second insulating portion has a second thickness b, and the first thickness a and the second thickness b satisfy: b>a; and
cutting the second insulating portion.

Compared with the prior art, the present disclosure has the following advantages.

In the technical solution of the present disclosure, the first insulating layer and the active layer are both coated on a first surface of the current collector. The first insulating layer includes a first insulating portion and a second insulating portion. The first insulating portion has a first side edge and a second side edge arranged opposite to the first side edge. The first side edge is pressed against the active layer, and the second side edge is pressed against the second insulating portion, i.e., the first insulating portion is arranged between the second insulating portion and the active layer. The second insulating portion is configured to be cut. Because the second thickness b of the second insulating portion is greater than the first thickness a of the first insulating portion, the second insulating portion can effectively improve the compatibility of the insulating layer with burrs formed on the cutting surface after cutting, thereby reducing the risk of burrs piercing the separator.

### BRIEF DESCRIPTION OF DRAWINGS

To illustrate the technical solutions in the embodiments of the present disclosure or the prior art more clearly, the accompanying drawings required for describing the embodiments or the prior art will be briefly introduced below. Obviously, the drawings in the following description show only some embodiments of the present disclosure, and for those having ordinary skills in the art, other drawings can also be obtained according to the structures shown in these drawings without creative efforts.
FIG. 1 is a schematic structural diagram of zebra coating of an electrode sheet according to an embodiment of the present disclosure;
FIG. 2 is a schematic structural diagram of an electrode sheet according to an embodiment of the present disclosure from a first perspective;
FIG. 3 is a schematic structural diagram of an electrode sheet according to an embodiment of the present disclosure from a second perspective, wherein the electrode sheet is coated with a first insulating layer and a second insulating layer;
FIG. 4 is a schematic structural diagram of an electrode sheet according to an embodiment of the present disclosure from a second perspective, wherein the electrode sheet is coated with a first insulating layer;
FIG. 5 is a schematic structural diagram of an electrode sheet according to an embodiment of the present disclosure, wherein the electrode sheet is cut at an edge of the second insulating portion;
FIG. 6 is a schematic structural diagram of an electrode sheet according to an embodiment of the present disclosure, wherein the electrode sheet is cut at an inner side of the second insulating portion; and
FIG. 7 is a flowchart of a method for manufacturing an electrode sheet according to an embodiment of the present disclosure.

### List of reference numerals:

electrode sheet 100;
current collector 110; first surface 111; second surface 112;
active layer 120;
first insulating layer 130; first insulating portion 131; first side edge 1311; second side edge 1312; second insulating portion 132; third side edge 1321; fourth side edge 1322;
second insulating layer 140; third insulating portion 141; fifth side edge 1411; sixth side edge 1412; fourth insulating portion 142;
first direction X;
second direction Y.

The objectives, functional features, and advantages of the present disclosure will be further described with reference to the accompanying drawings and embodiments.

### DETAILED DESCRIPTION

The technical solutions in the embodiments of the present application will be clearly and completely described below with reference to the accompanying drawings in the embodiments of the present disclosure. Obviously, the described embodiments are merely some rather than all of the embodiments of the present disclosure. All other embodiments obtained by those having ordinary skills in the art based on the embodiments of the present disclosure without creative effort shall fall within the protection scope of the present disclosure.

Two sides of the active layer on the current collector of a zebra-coated electrode sheet are each coated with an insulating layer. During manufacturing, the electrode sheet coated with the active layer and the insulating layer needs to be rolled. The rolling can reduce the thicknesses of the active layer and the insulating layer, so that the thickness of the electrode sheet can be reduced and the energy density of the electrode sheet can be improved. After rolling, the insulating layer needs to be cut to make the electrode sheet meet usage requirements. When the insulating layer is cut, burrs may be formed on part of the cut surface of the insulating layer. In the battery cell, the thinner the insulating coating, the more likely burrs are to extend beyond the coating area and pierce the separator in the thickness direction of the electrode sheet, eventually leading to the safety problem of short circuit inside the battery cell. In the prior art, to facilitate rolling, the insulating layer generally has a uniform thickness. After cutting, the insulating layer has poor compatibility with burrs, the separator of the battery cell is easily pierced by burrs, and the battery cell is easily short-circuited.

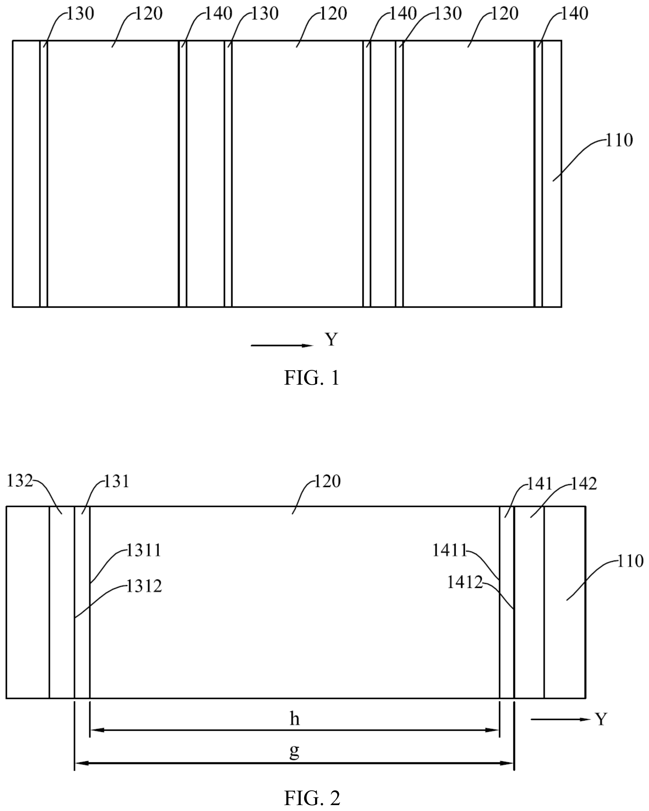

In order to solve the above problems, as shown in FIG. 1 to FIG. 6, the present disclosure provides an electrode sheet 100, which includes a current collector 110, an active layer 120, and a first insulating layer 130.

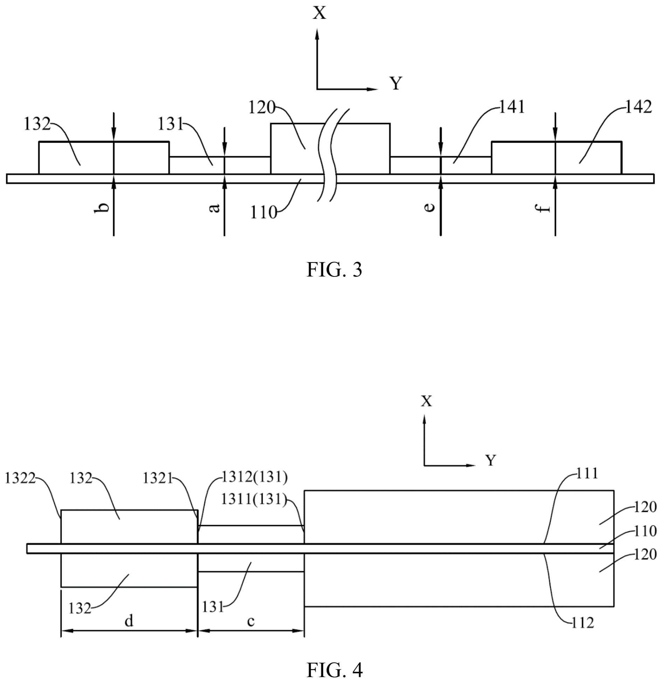

As shown in FIG. 1 and FIG. 4, the current collector 110 is configured to be coated with the active layer 120 and an insulating layer. Generally, the current collector 110 has a first surface 111 and a second surface 112 arranged opposite to the first surface 111. Both the first surface 111 and the second surface 112 can be configured to be coated with the active layer 120 and the insulating layer. For convenience of description, coating of the first surface 111 of the current collector 110 with the active layer 120 and the insulating layer is used as an example. In some embodiments, the insulating layer may be configured as a ceramic layer.

As shown in FIG. 2 and FIG. 4, the active layer 120 and the first insulating layer 130 are both coated on the first surface 111 of the current collector 110.

As shown in FIG. 3 and FIG. 4, the first insulating layer 130 includes a first insulating portion 131 and a second insulating portion 132. The first insulating portion 131 has a first side edge 1311 and a second side edge 1312 arranged opposite to the first side edge 1311. The first side edge 1311 is pressed against the active layer 120, and the second side edge 1312 is pressed against the second insulating portion 132. In other words, the second insulating portion 132, the first insulating portion 131, and the active layer 120 are coated on the first surface 111 in sequence. The second insulating portion 132 is configured to be cut. In a direction perpendicular to the first surface 111, the first insulating portion 131 has a first thickness a, and the second insulating portion 132 has a second thickness b. The first thickness a and the second thickness b satisfy: b>a. It can be understood that in the present disclosure, the direction perpendicular to the first surface 111 is defined as a first direction X, the insulating layer and the active layer 120 have a certain thickness in the first direction X, the arrangement direction of the active layer 120 and the insulating layer is defined as a second direction Y, and the insulating layer and the active layer 120 have a certain width in the second direction Y.

In the technical solution of the present disclosure, the first insulating layer 130 and the active layer 120 are both coated on the first surface 111 of the current collector 110, and the first insulating layer 130 includes a first insulating portion 131 and a second insulating portion 132. The first insulating portion 131 has a first side edge 1311 and a second side edge 1312 arranged opposite to the first side edge 1311. The first side edge 1311 is pressed against the active layer 120. The second side edge 1312 is pressed against the second insulating portion 132. The second insulating portion 132 is configured to be cut. The first insulating portion 131 is arranged between the second insulating portion 132 and the active layer 120, and the second thickness b of the second insulating portion 132 is greater than the first thickness a of the first insulating portion 131. Because the second insulating portion 132 has a larger thickness, the second insulating portion 132 can effectively improve the compatibility of the insulating layer with burrs formed on the cutting surface after cutting, thereby reducing the risk of burrs piercing the separator.

As shown in FIG. 3, the thickness of the first insulating portion 131 is less than the thickness of the second insulating portion 132. Specifically, a ratio of the thickness of the first insulating portion 131 to the thickness of the second insulating portion 132 in different electrode sheets 100 may vary with requirements. In this embodiment, the first thickness a and the second thickness b satisfy: 1<b/a≤1.5. Preferably, a ratio of the first thickness a to the second thickness b may satisfy: 1.1≤b/a≤1.3. Specifically, the second thickness b may be 1.05, 1.1, 1.2, 1.25, 1.3, 1.36, 1.4, 1.45, 1.47, 1.5, etc., times the first thickness a, which is not limited herein.

Widths of the first insulating portion 131 and the second insulating portion 132 in the arrangement direction of the insulating layer and the active layer 120 may also be separately set according to different usage requirements. As shown in FIG. 4, in this embodiment, the second insulating portion 132 has a third side edge 1321 and a fourth side edge 1322 arranged opposite to the third side edge 1321, the third side edge 1321 is pressed against the second side edge 1312. In the arrangement direction of the active layer 120 and the first insulating layer 130, a first minimum distance c exists between the first side edge 1311 and the second side edge 1312, and a second minimum distance d exists between the third side edge 1321 and the fourth side edge 1322, wherein the first minimum distance c and the second minimum distance d satisfy: 0.5≤d/c≤5.Specifically, when 0.5≤d/c≤1, the first minimum distance c is not less than the second minimum distance d, i.e., in the second direction Y, the width of the first insulating portion 131 may be greater than or equal to the width of the second insulating portion 132. Because the thickness of the first insulating portion 131 is also less than the thickness of the second insulating portion 132, properly controlling the widths of the first insulating portion 131 and the second insulating portion 132 according to different usage requirements is conducive to controlling the overall thickness of the battery cell. Specifically, a ratio of the second minimum distance d to the first minimum distance c may be 0.5, 0.7, 0.9, or 1, which is not limited herein. When 1<d/c≤5, the first minimum distance c is less than the second minimum distance d, i.e., in the second direction Y, the width of the first insulating portion 131 is less than the width of the second insulating portion 132. The second insulating portion 132 is configured to be cut to form a tab connection portion or the like. The second insulating portion 132 is generally cut by laser cutting or die cutting. The large width of the second insulating portion 132 is conducive to improving the convenience of cutting. Specifically, the second minimum distance d may be 1.2, 1.3, 1.5, 2, 3, 5, etc., times the first minimum distance c.

The second insulating portion 132 is configured to be cut. To facilitate cutting of the second insulating portion 132, improve the compatibility of the second insulating portion 132 with burrs after cutting , and reduce the impact of the second insulating portion 132 on the thickness of the battery cell, the first minimum distance c and the second minimum distance d may satisfy: 1≤d/c≤2. As shown in FIG. 4, in this embodiment, the first minimum distance c of the first insulating portion 131 and the second minimum distance d of the second insulating portion 132 satisfy: 1≤d/c≤2. Specifically, the ratio of the first minimum distance c to the second minimum distance d may be any suitable value such as 1, 1.2, 1.5, or 2. The width of the second insulating portion 132 is not less than the width of the first insulating portion 131. Therefore, the second insulating portion 132 has a large width for cutting, so that the cutting difficulty can be effectively reduced. In addition, the second insulating portion 132 can still have a large width after the cutting is completed, so that the second insulating portion 132 has sufficient strength, and the compatibility of the second insulating portion 132 with burrs in the thickness direction of the electrode sheet 100 is improved. Because the ratio of the width of the second insulating portion 132 to the width of the first insulating portion 131 is not greater than 2, the impact of the second insulating portion 132 on the thickness of the battery cell can be reduced after the electrode sheet 100 is used in the battery cell.

The total width of the first insulating portion 131 and the second insulating portion 132 may vary with different usage requirements. As shown in FIG. 4, in this embodiment, the first minimum distance c and the second minimum distance d satisfy: 1 mm≤c+d≤20 mm. In other words, the total width of the first insulating portion 131 and the second insulating portion 132 in the second direction Y may be 1 mm, 2 mm, 6 mm, 10 mm, 15 mm, or 20 mm. Specifically, as the ratio of the first minimum distance c to the second minimum distance d varies, the first minimum distance c and the second minimum distance d may both be 0.5 mm; the first minimum distance c may be 3 mm and correspondingly the second minimum distance d may be 1.5 mm; or the first minimum distance c may be 3 mm and correspondingly the second minimum distance d may be 6 mm, which is not limited herein.

In the zebra coating, two sides of the active layer 120 in the second direction Y may each be coated with an insulating layer. To further improve the compatibility of the electrode sheet 100 with burrs formed by cutting, the insulating layers on the two sides of the active layer 120 may each be configured as a stepped structure. As shown in FIG. 3, in this embodiment, the electrode sheet 100 further includes a second insulating layer 140. The second insulating layer 140 is arranged on a side of the active layer 120 away from the first insulating layer 130. The second insulating layer 140 includes a third insulating portion 141 and a fourth insulating portion 142. One side of the third insulating portion 141 is pressed against the active layer 120, and another side of the third insulating portion 141 is pressed against the fourth insulating portion 142. The fourth insulating portion 142 is configured to be cut. In the direction perpendicular to the first surface 111, the third insulating portion 141 has a third thickness e, and the fourth insulating portion 142 has a fourth thickness f. The third thickness e and the fourth thickness f satisfy: f>e. It can be understood that during manufacturing, the active layer 120, the first insulating layer 130, and the second insulating layer 140 may be first coated on the first surface 111. After the coating is completed, the active layer 120, the first insulating layer 130, and the second insulating layer 140 as a whole are directly rolled by a roller. In addition, at least a part of the first insulating layer 130 and at least a part of the second insulating layer 140 are further rolled by the roller, to obtain the first insulating portion 131 and the second insulating portion 132 on the first insulating layer 130 and obtain the third insulating portion 141 and the fourth insulating portion 142 on the second insulating layer 140. Because the coating thicknesses of the first insulating layer 130 and the second insulating layer 140 before rolling may be equal, and the pressures applied by the roller to the first insulating layer 130 and the second insulating layer 140 during rolling may be equal, the thicknesses of the first insulating portion 131 and the third insulating portion 141 obtained by rolling may be equal, and the thicknesses of the second insulating portion 132 and the fourth insulating portion 142 obtained by rolling may be equal. In some embodiments, the thickness of the first insulating layer 130 and the thickness of the second insulating layer 140 may not be equal to each other as long as the second insulating portion 132 and the fourth insulating portion 142 can improve the compatibility of the electrode sheet 100 with burrs.

The first insulating portion 131, the second insulating portion 132, and the active layer 120 may be rolled at the same time. Because a longer length of the roller in the second direction Y indicates a higher difficulty in controlling the consistency of the force applied by the roller to the coating layers, the width of the first insulating portion 131 and the second insulating portion 132 may be not greater than 3.5 mm, so that the roller can apply a more balanced pressure on difference parts and obtain a more uniform thickness by rolling. As shown in FIG. 2, in this embodiment, the third insulating portion 141 has a fifth side edge 1411 and a sixth side edge 1412 arranged opposite to the fifth side edge 1411. The fifth side edge 1411 is pressed against the active layer 120. The sixth side edge 1412 is pressed against the fourth insulating portion 142. In the arrangement direction of the active layer 120 and the first insulating layer 130, a third minimum distance g exists between the sixth side edge 1412 and the second side edge 1312, and a fourth minimum distance h exists between the first side edge 1311 and the fifth side edge 1411. The third minimum distance g and the fourth minimum distance h satisfy: 0.5 mm≤g-h≤3.5 mm. The fourth minimum distance h between the first side edge 1311 and the fifth side edge 1411 is the width of the active layer 120 in the second direction Y, and the third minimum distance g between the sixth side edge 1412 and the second side edge 1312 is the total width of the first insulating portion 131, the second insulating portion 132, and the active layer 120 in the second direction Y. Specifically, a difference between the third minimum distance g and the fourth minimum distance h may be 0.5 mm, 1 mm, 2 mm, 2.5 mm, 3 mm, or 3.5 mm. It should be noted that the difference between the third minimum distance g and the fourth minimum distance h is the sum of the widths of the first insulating portion 131 and the second insulating portion 132. The first insulating portion 131 and the second insulating portion 132 may have the same or different widths depending on different usage requirements, which is not limited herein.

To further improve the consistency of rolling, the actual lengths of the third minimum distance g and the fourth minimum distance h may vary with the length of the roller. As shown in FIG. 2, in this embodiment, the third minimum distance g may satisfy: 50 mm≤g≤500 mm. Specifically, the third minimum distance g may be any suitable distance such as 50 mm, 100 m, 350 mm, 475 mm, or 500 mm, and in this case, the fourth minimum distance h is any distance satisfying 0.5 mm≤g-h≤3.5 mm. The fourth minimum distance h may satisfy: 50 mm≤h≤500 mm. Specifically, the fourth minimum distance h may be any suitable distance such as 50 mm, 100 m, 350 mm, 475 mm, or 500 mm, and in this case, the third minimum distance g is any distance satisfying 0.5 mm≤g-h≤3.5 mm.

A second aspect of the present disclosure further provides a battery (not shown), including the electrode sheet 100 according to any one of the above embodiments. Thanks to the improvements of the electrode sheet 100, the battery of this embodiment has the same technical effects as the electrode sheet 100, so the details will not be repeated herein.

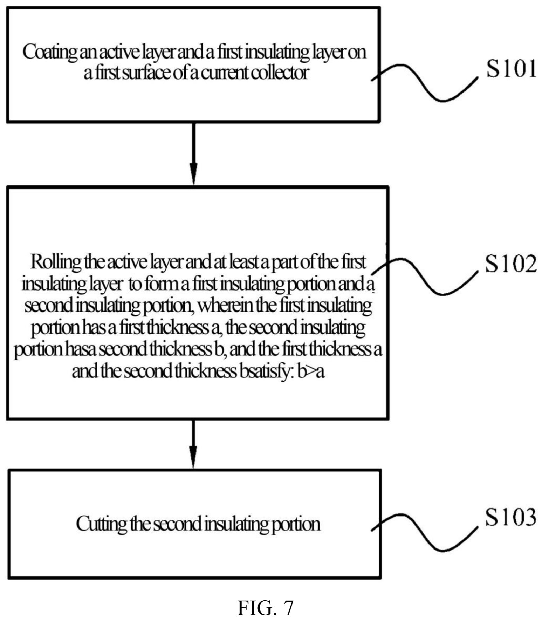

As shown in FIG. 7, a third aspect of the present disclosure provides a method for manufacturing an electrode sheet 100, wherein the method for manufacturing the electrode sheet 100 includes:
S101: coating an active layer 120 and a first insulating layer 130 on a first surface 111 of a current collector 110;
S102: rolling the active layer 120 and at least a part of the first insulating layer 130 to form a first insulating portion 131 and a second insulating portion 132, wherein the first insulating portion 131 has a first thickness a, the second insulating portion 132 has a second thickness b, and the first thickness a and the second thickness b satisfy: b>a; and
S103: cutting the second insulating portion 132.

In the step S101 of coating the active layer 120 and the first insulating layer 130 on the first surface 111 of the current collector 110, the order in which the active layer 120 and the first insulating layer 130 are coated may be arbitrary and is not limited herein. In some embodiments, a second insulating layer 140 may further be coated on the electrode sheet 100, wherein the first insulating layer 130 and the second insulating layer 140 are arranged on two opposing sides of the active layer 120.

In the step S102, at least a part of the insulating layer is rolled using a roller. During rolling of the first insulating layer 130 by the roller, to make the second thickness b of the second insulating portion 132 of the first insulating layer 130 greater than the first thickness a of the first insulating portion 131 after rolling, in some embodiments, the roller may roll only a portion of the first insulating layer 130 close to the active layer 120, so that the thickness of the portion of the first insulating layer 130 that is rolled is less than a portion of the first insulating layer 130 that has not been rolled. In other words, the portion of the first insulating layer 130 close to the active layer 120 is rolled by the roller to form the first insulating portion 131, and a portion of the first insulating layer 130 away from the active layer 120 is not rolled to form the second insulating portion 132. In some embodiments, the roller may roll the entire first insulating layer 130. To make the second thickness b greater than the first thickness a after rolling, the pressure applied by the roller to the side of the first insulating layer 130 close to the active layer 120 may be greater than the pressure applied by the roller to the side of the first insulating layer 130 away from the active layer 120. Specifically, the roller may be configured to have different shapes. A portion of the roller corresponding to the side of the first insulating layer 130 close to the active layer 120 may have a larger diameter, and a portion of the roller corresponding to the side of the first insulating layer 130 away from the active layer 120 may have a smaller diameter, so that the first insulating portion 131 and the second insulating portion 132 can be formed on the first insulating layer 130 when the first insulating layer 130 is rolled by the roller. It should be noted that the active layer 120 and at least a part of the first insulating layer 130 are rolled by the roller, and the thickness of the active layer 120 and the thickness of the first insulating portion 131 after rolling may be the same or different, which is not limited herein. In some embodiments, the first insulating layer 130, the active layer 120, and the second insulating layer 140 are laid in sequence in the electrode sheet 100. When the active layer 120, at least a part of the first insulating layer 130, and at least a part of the second insulating layer 140 are rolled by the roller to form the first insulating portion 131 and the third insulating portion 141, a width of the roller in the second direction Y is the sum of the widths of the first insulating portion 131, the third insulating portion 141, and the active layer 120.

In the step S103 of cutting the second insulating portion 132, the second insulating portion 132 may be cut by laser cutting or die cutting. In the prior art, when the insulating layer is rolled using a roller, the end of the insulating layer away from the active layer 120 may be excessively rolled due to the deflection variation of the roller or other factors. Excessive rolling by the roller leads to an unduly small thickness of the insulating layer and a poor compatibility of the insulating layer with burrs on one hand, and greatly increases the density of the insulating layer on the other hand. As a result, a laser beam with a high power and a larger pulse width is required for laser cutting of the insulating layer, and debris and blurs are more likely to be formed during cutting of the insulating layer. As shown in Table 1, when an electrode sheet with an insulating layer thickness of 40 µm before rolling was cut with 50% laser power, the average size of burrs formed on the cutting surface was 2.3 µm. When an electrode sheet with an insulating layer thickness of 40 µm after rolling was cut with 50% laser power, the average size of burrs formed on the cutting surface increased to 14.3 µm due to the increase of the density of the insulating layer. When the laser power for cutting was increased to 60% to reduce the average burr size, the average burr size decreased to 8.3 µm, which was still greater than 2.3 µm. Similarly, when an electrode sheet with an insulating layer thickness of 50 µm before rolling was cut with 50% laser power, the average size of burrs formed on the cutting surface was 5.2 µm. When an electrode sheet with an insulating layer thickness of 40 µm after rolling was cut with 50% laser power, the average size of burrs formed on the cutting surface increased to 18.2 µm due to the increase of the density of the insulating layer. When the laser power for cutting was increased to 60% to reduce the average burr size, the average burr size decreased to 10.2 µm, which was still greater than 5.2 µm. It can be seen that the increase in the density of the insulating layer caused by excessive rolling greatly increases the average burr size after cutting. It is clear that excessive rolling not only increases the cutting difficulty, but also reduces the thickness of the insulating layer, greatly increases the burr height, and reduces the compatibility of the insulating layer with burrs, which will not be described in detail herein.

**Table 1**

| Insulating layer thickness before rolling (µm) | Laser power | Average burr size on laser-cut surface (µm) | Insulating layer thickness after rolling (µm) | Laser power | Average burr size on laser-cut surface (µm) |
|---|---|---|---|---|---|
| 40 | 50% | 2.3 | 40 | 50% | 14.3 |
| 50 | 50% | 5.2 | 40 | 60% | 8.3 |
| / | / | / | 50 | 50% | 18.2 |
| / | / | / | 50 | 60% | 10.2 |

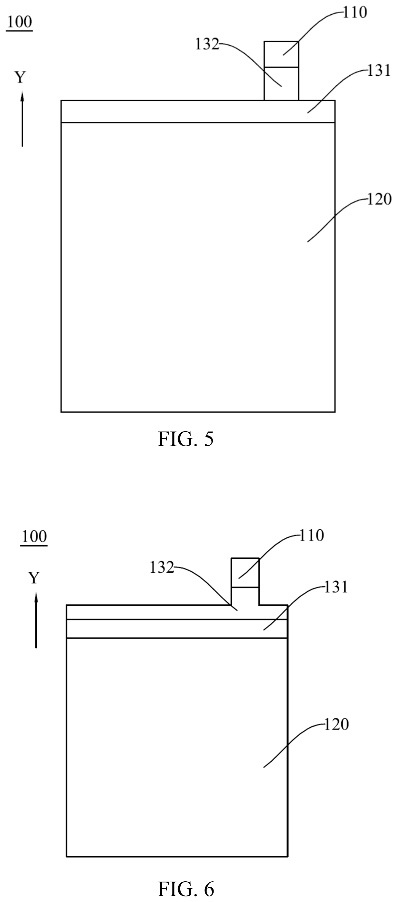

In the technical solution of the present disclosure, the first insulating layer 130 formed by rolling includes the first insulating portion 131 and the second insulating portion 132. On one hand, the thickness of the second insulating portion 132 is greater than the thickness of the second insulating portion 132, so that the compatibility of the first insulating layer 130 with burrs is greatly improved. On other hand, in the present disclosure, excessive rolling of the second insulating portion 132 configured to be cut can be effectively reduced, so that the density of the second insulating portion 132 is lower than that of the first insulating portion 131, the risk of formation of debris and burrs during cutting of the second insulating portion 132 is greatly reduced, and the compatibility of the insulating layer with burrs is further improved. It should be noted that during cutting, as shown in FIG. 5, the second insulating portion 132 may be cut at the junction of the second insulating portion 132 and the first insulating portion 131 to form a tab connection portion, or as shown in FIG. 6, the second insulating portion 132 may be cut at an inner side of the second insulating portion 132 to form a tab connection portion, which is not limited herein.

It should be noted that directional indications (such as up, down, left, right, front, back, etc.) in the embodiments of the present disclosure are used solely to explain the relative positional relationships, movement, etc., between components in a specific posture. If the specific posture changes, these directional indications shall change accordingly.

In addition, if the embodiments in the present disclosure describe elements with terms such as "first" and "second", these descriptions are for descriptive purposes only and are not to be construed as indicating or implying relative importance, or implicitly specifying the quantity of the technical feature referred to. Thus, features defined by "first" or "second" may explicitly or implicitly include at least one such feature. Furthermore, the terms "and/or" as used throughout the text should be understood to include three parallel alternative embodiments. Taking "A and/or B" as an example, it includes: option A alone, option B alone, or an option comprising both option A and option B. Additionally, the technical solutions in the various embodiments can be combined, however, such combination must be feasible for those having ordinary skills in the art to implement. If the combination of technical solutions results in mutual contradiction or impossibility of implementation, it should be considered that such a combination does not exist and is not within the scope of protection claimed in the present disclosure.

The above descriptions are merely preferred embodiments of the present disclosure, and are not intended to limit the patent scope of the present disclosure. Any equivalent structural transformation made based on the contents of the specification and drawings of the present disclosure, or the direct or indirect application of the present disclosure to other related technical fields without departing from the inventive concept of the present disclosure are all included in the protection scope of the present disclosure.

## Claims

1. An electrode sheet, comprising:
a current collector,
an active layer, coated on a first surface of the current collector; and
a first insulating layer, coated on the first surface of the current collector, wherein the first insulating layer comprises a first insulating portion and a second insulating portion; the first insulating portion has a first side edge and a second side edge arranged opposite to the first side edge, the first side edge is pressed against the active layer, the second side edge is pressed against the second insulating portion, and the second insulating portion is configured to be cut; and in a direction perpendicular to the first surface, the first insulating portion has a first thickness a and the second insulating portion has a second thickness b, and the first thickness a and the second thickness b satisfy: b>a.

2. The electrode sheet of claim 1, wherein the first thickness a and the second thickness b satisfy: 1<b/a≤1.5.

3. The electrode sheet of claim 1, wherein the second insulating portion has a third side edge and a fourth side edge arranged opposite to the third side edge, the third side edge is pressed against the second side edge, in an arrangement direction of the active layer and the first insulating layer, a first minimum distance c exists between the first side edge and the second side edge, a second minimum distance d exists between the third side edge and the fourth side edge, and the first minimum distance c and the second minimum distance d satisfy: 0.5≤d/c≤5.

4. The electrode sheet of claim 3, wherein the first minimum distance c and the second minimum distance d satisfy: 1≤d/c≤2.

5. The electrode sheet of claim 3, wherein the first minimum distance c and the second minimum distance d satisfy: 1 mm≤c+d≤20 mm.

6. The electrode sheet of claim 1, further comprising:
a second insulating layer, wherein the second insulating layer is arranged on a side of the active layer away from the first insulating layer, the second insulating layer comprises a third insulating portion and a fourth insulating portion, one side of the third insulating portion is pressed against the active layer, another side of the third insulating portion is pressed against the fourth insulating portion, the fourth insulating portion is configured to be cut, in the direction perpendicular to the first surface, the third insulating portion has a third thickness e and the fourth insulating portion has a fourth thickness f, and the third thickness e and the fourth thickness f satisfy: f>e.

7. The electrode sheet of claim 6, wherein the third insulating portion has a fifth side edge and a sixth side edge arranged opposite to the fifth side edge, the fifth side edge is pressed against the active layer, the sixth side edge is pressed against the fourth insulating portion, in the arrangement direction of the active layer and the first insulating layer, a third minimum distance g exists between the sixth side edge and the second side edge, a fourth minimum distance h exists between the first side edge and the fifth side edge, and the third minimum distance g and the fourth minimum distance h satisfy: 0.5 mm≤g-h≤3.5 mm.

8. The electrode sheet of claim 7, wherein the third minimum distance g satisfies: 50 mm≤g≤500 mm; or
the fourth minimum distance h satisfies: 50 mm≤h≤500 mm.

9. A battery, comprising the electrode sheet of any one of claims 1 to 8.

10. A method for manufacturing an electrode sheet, comprising:
coating an active layer and a first insulating layer on a first surface of a current collector;
rolling the active layer and at least a part of the first insulating layer to form a first insulating portion and a second insulating portion, wherein the first insulating portion has a first thickness a, the second insulating portion has a second thickness b, and the first thickness a and the second thickness b satisfy: b>a; and
cutting the second insulating portion.
